(19) 

**Europäisches Patentamt**
**European Patent Office**
**Office européen des brevets**

(11) **EP 4 730 261 A1**

(12) **EUROPEAN PATENT APPLICATION**
published in accordance with Art. 153(4) EPC

(43) Date of publication:
**22.04.2026 Bulletin 2026/17**

(21) Application number: **24943657.7**

(22) Date of filing: **26.09.2024**

(51) International Patent Classification (IPC):
**G06T 7/80** (2017.01)   **G06F 3/01** (2006.01)

(86) International application number:
**PCT/CN2024/121538**

(87) International publication number:
**WO 2026/036483 (19.02.2026 Gazette 2026/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.08.2024 CN 202411118585**

(71) Applicant: **Hangzhou Ruijian Zhixing Technology
Co., Ltd.**
**Hangzhou, Zhejiang 311222 (CN)**

(72) Inventors:
• **TAN, Panyu**
  **Hangzhou, Zhejiang 311222 (CN)**
• **YANG, Yihong**
  **Hangzhou, Zhejiang 311222 (CN)**
• **LIU, Guoqing**
  **Hangzhou, Zhejiang 311222 (CN)**

(74) Representative: **Vogelbruch, Keang**
**VOGELBRUCH Patentanwaltsgesellschaft mbH**
**Paul-Gerhardt-Straße 16**
**40593 Düsseldorf (DE)**

(54) **METHOD AND APPARATUS FOR DETERMINING EXTRINSIC PARAMETER OF CAMERA
INSIDE VEHICLE, ELECTRONIC DEVICE, AND STORAGE MEDIUM**

(57)    The present disclosure provides a method, an apparatus, an electronic device, and a storage medium for determining camera extrinsic parameters within a vehicle. In the present disclosure, the camera extrinsic parameters are obtained through interior points, which can avoid the use of a calibration board and obtain the camera extrinsic parameters without manual intervention, which helps reduce operational requirements when determining the camera extrinsic parameters.

In response to that a trigger condition for re-determining the camera extrinsic parameters of the camera is satisfied, determine, based on a first video frame captured by the camera, a center point coordinate and a perimeter of a figure formed by at least one target interior point in the first video frame — 201

Construct a first transformation relationship between a first rotation matrix for transforming a reference camera coordinate system to a current camera coordinate system and a target interior point element, and a second transformation relationship between a first translation matrix for transforming the reference camera coordinate system to the current camera coordinate system and the target interior point element, based on a first linear relationship between the center point coordinate and an RT matrix, a second linear relationship between the perimeter and the RT matrix, and a third linear relationship between the center point coordinate and the perimeter — 202

Determine the first rotation matrix and the first translation matrix based on an M matrix, an N matrix, the first transformation relationship, and the second transformation relationship, to use the first rotation matrix and the first translation matrix as the camera extrinsic parameters of the camera — 203

FIG. 2

EP 4 730 261 A1

# EP 4 730 261 A1

**Description**

## CROSS-REFERENCE TO RELATED APPLICATIONS

The present disclosure claims the priority to the Chinese patent application with the filling No. 202411118585.7 filed with the Chinese Patent Office on August 15, 2024, and entitled "METHOD, APPARATUS, ELECTRONIC DEVICE, AND STORAGE MEDIUM FOR DETERMINING CAMERA EXTRINSIC PARAMETERS WITHIN VEHICLE", the contents of which are incorporated herein by reference in entirety.

## TECHNICAL FIELD

The present disclosure relates to the field of computer technology, in particular to a method, an apparatus, an electronic device, and a storage medium for determining camera extrinsic parameters within a vehicle.

## BACKGROUND ART

For intelligent vehicles with gesture control functions, the controllable component that the user currently wants to control in the vehicle can be determined through a gaze tracking function, then the gesture currently made by the user is recognized through a gesture recognition function, and then the controllable component is controlled. In the process of determining the controllable component using the gaze tracking function, each controllable component needs to be converted from the world coordinate system to the camera coordinate system, so as to determine the corresponding controllable component based on the gaze coordinates of the user's gaze in the camera coordinate system. In the process of converting each controllable component from the world coordinate system to the camera coordinate system, camera extrinsic parameters need to be used for the transformation.

When the position of the camera moves, the camera extrinsic parameters need to be re-determined; otherwise, the determined controllable component will be inaccurate, or the controllable component cannot be determined. Currently, when re-determining the camera extrinsic parameters, a calibration board needs to be used. In this process, the user's operation needs to satisfy the usage standards of the calibration board, which results in relatively high operational requirements when re-determining the camera extrinsic parameters using the calibration board.

## SUMMARY

In view of this, embodiments of the present disclosure provide a method, an apparatus, an electronic device, and a storage medium for determining camera extrinsic parameters within a vehicle, to reduce the operational requirements when re-determining the camera extrinsic parameters.

In a first aspect, an embodiment of the present disclosure provides a method for determining camera extrinsic parameters within a vehicle, wherein a camera is arranged on a steering column of the vehicle, and the method includes steps of:

in response to that a trigger condition for re-determining the camera extrinsic parameters of the camera is satisfied, determining, based on a first video frame captured by the camera, a center point coordinate and a perimeter of a figure formed by at least one target interior point in the first video frame, wherein in response to that a quantity of the at least one target interior point is one, the center point coordinate is a pixel coordinate of the target interior point, and the perimeter is a horizontal coordinate of the target interior point;

constructing a first transformation relationship between a first rotation matrix for transforming a reference camera coordinate system to a current camera coordinate system and a target interior point element, and a second transformation relationship between a first translation matrix for transforming the reference camera coordinate system to the current camera coordinate system and the target interior point element, based on a first linear relationship between the center point coordinate and an RT matrix, a second linear relationship between the perimeter and the RT matrix, and a third linear relationship between the center point coordinate and the perimeter, wherein the target interior point element includes the center point coordinate and the perimeter, and the RT matrix is composed of a rotation matrix and a translation matrix;

determining the first rotation matrix and the first translation matrix based on an M matrix, an N matrix, the first transformation relationship, and the second transformation relationship, to use the first rotation matrix and the first translation matrix as the camera extrinsic parameters of the camera, wherein the M matrix is a second translation matrix for transforming a specified pixel point in the first video frame, captured by the camera at a current position, to the reference camera coordinate system, and the N matrix is a second rotation matrix for transforming the specified pixel point in the first video frame, captured by the camera at the current position, to the reference camera coordinate system.

Optionally, the step of determining, based on a first video frame captured by the camera, a center point coordinate and a perimeter of a figure formed by at least one target interior point in the first video frame includes:

inputting the first video frame into a trained interior point positioning model to obtain a pixel coordinate of the at least one target interior point; and
determining the center point coordinate and the perimeter of the figure formed by the at least one target interior point based on the pixel coordinate of the at least one target interior point.

Optionally, the method further includes:

acquiring a plurality of first videos captured by the camera during movement of the steering column; and
training an interior point positioning model to be trained by using each second video frame annotated in the plurality of first videos to obtain the trained interior point positioning model, wherein when annotating each second video frame, the target interior point in each second video frame is annotated.

Optionally, a movement range of the steering column is less than or equal to a region defined by a maximum stroke attainable by the steering column during vertical and telescopic movement.
Optionally, each of the plurality of first videos includes a plurality of sub-videos captured at a plurality of discrete positions within the movement range.
Optionally, the movement of the steering column starts from a first vertex of a trapezoid formed by the region and ends at a second vertex on a side of the trapezoid opposite to a side where the first vertex is located; during the movement, the steering column moves in an S-shape; and during the S-shaped movement, a distance between peaks and troughs of the S-shape and the maximum stroke attainable by the steering column is less than a preset distance.
Optionally, the plurality of different first videos are captured under different illumination conditions.
Optionally, the at least one target interior point comprises at least one of: a position in the second video frame having a pixel difference greater than a preset pixel difference; or an acute angle point formed by two edges in the second video frame.
Optionally, a quantity of target interior points annotated in any second video frame is equal to a quantity of target interior points determined in the first video frame.
Optionally, the trigger condition includes at least one of:
upon vehicle startup, upon a movement of a steering wheel position, upon reaching a re-determination period for the camera extrinsic parameters, or upon a travel speed of the vehicle exceeding a preset speed.
Optionally, the method further includes:

determining a first position of a controllable component in the vehicle in the camera coordinate system based on the camera extrinsic parameters;
determining, in response to a face image of a user is captured by the camera, a second position of the user's gaze in the camera coordinate system by using gaze positioning; and
determining a target position overlapping with the second position from the first position.

In a second aspect, an embodiment of the present disclosure provides an apparatus for determining camera extrinsic parameters within a vehicle. The apparatus includes:

a first determination unit, configured to, when a trigger condition for re-determining the camera extrinsic parameters of the camera is satisfied, determine a center point coordinate and a perimeter of a figure formed by at least one target interior point in a first video frame captured by the camera, wherein when a quantity of the at least one target interior point is one, the center point coordinate is the pixel coordinate of the target interior point, and the perimeter is the horizontal coordinate of the target interior point, and the camera is arranged on a steering column of the vehicle;
a construction unit, configured to construct a first transformation relationship between a first rotation matrix for transforming a reference camera coordinate system to a current camera coordinate system and a target interior point element, and a second transformation relationship between a first translation matrix for transforming the reference camera coordinate system to the current camera coordinate system and the target interior point element, based on a first linear relationship between the center point coordinate and an RT matrix, a second linear relationship between the perimeter and the RT matrix, and a third linear relationship between the center point coordinate and the perimeter, wherein the target interior point element includes the center point coordinate and the perimeter, and the RT matrix is composed of a rotation matrix and a translation matrix;

a second determination unit, configured to determine the first rotation matrix and the first translation matrix based on an M matrix, an N matrix, the first transformation relationship, and the second transformation relationship, thereby using the first rotation matrix and the first translation matrix as the camera extrinsic parameters of the camera, wherein the M matrix is a second translation matrix for transforming a specified pixel point in the first video frame, captured by the camera at a current position, to the reference camera coordinate system, and the N matrix is a second rotation matrix for transforming the specified pixel point in the first video frame, captured by the camera at the current position, to the reference camera coordinate system.

Optionally, the first determination unit, when configured to determine, based on a first video frame captured by the camera, a center point coordinate and a perimeter of a figure formed by at least one target interior point in the first video frame, is specifically configured to:

input the first video frame into a trained interior point positioning model to obtain a pixel coordinate of the at least one target interior point; and
determine the center point coordinate and the perimeter of the figure formed by the at least one target interior point based on the pixel coordinate of the at least one target interior point.

Optionally, the apparatus further includes:

an acquisition unit, configured to acquire a plurality of first videos captured by the camera during movement of the steering column; and
a training unit, configured to train an interior point positioning model to be trained by using each second video frame annotated in the plurality of first videos to obtain the trained interior point positioning model, wherein when annotating each second video frame, the target interior point in each second video frame is annotated.

Optionally, a movement range of the steering column is less than or equal to a region defined by a maximum stroke attainable by the steering column during vertical and telescopic movement.
Optionally, each of the plurality of first videos includes a plurality of sub-videos captured at a plurality of discrete positions within the movement range.
Optionally, the movement of the steering column starts from a first vertex of a trapezoid formed by the region and ends at a second vertex on a side of the trapezoid opposite to a side where the first vertex is located; during the movement, the steering column moves in an S-shape; and during the S-shaped movement, a distance between peaks and troughs of the S-shape and the maximum stroke attainable by the steering column is less than a preset distance.
Optionally, the plurality of different first videos are captured under different illumination conditions.
Optionally, the at least one target interior point comprises at least one of: a position in the second video frame having a pixel difference greater than a preset pixel difference; or an acute angle point formed by two edges in the second video frame.
Optionally, a quantity of target interior points annotated in any second video frame is equal to a quantity of target interior points determined in the first video frame.
Optionally, the trigger condition includes at least one of:
upon vehicle startup, upon movement of a steering wheel position, upon reaching a re-determination period for the camera extrinsic parameters, or upon a travel speed of the vehicle exceeding a preset speed.
Optionally, the apparatus further includes:

a third determination unit, configured to determine a first position of a controllable component in the vehicle in the camera coordinate system based on the camera extrinsic parameters;
a positioning unit, configured to determine, in response to that a face image of a user is captured by the camera, a second position of the user's gaze in the camera coordinate system by using gaze positioning; and
a fourth determination unit, configured to determine a target position overlapping with the second position from the first position.

In a third aspect, an embodiment of the present disclosure provides an electronic device, including a processor and a memory, wherein the memory stores machine-executable instructions executable by the processor, the processor is configured to execute the machine-executable instructions to perform the method for determining camera extrinsic parameters within a vehicle according to any one of the above embodiments of the first aspect.
In a fourth aspect, an embodiment of the present disclosure provides a machine-readable storage medium storing machine-executable instructions that, when invoked and executed by a processor, cause the processor to perform the method for determining camera extrinsic parameters within a vehicle according to any one of the above embodiments of the first aspect.

The technical solution provided by the embodiments of the present disclosure may achieve the following beneficial effects:

In the present disclosure, when it is necessary to re-determine the camera extrinsic parameters, a first video frame is obtained based on images captured by a camera mounted on the steering column of the vehicle. The center point coordinates and perimeter of a figure formed by at least one target interior point in the first video frame are determined. Then, based on a first linear relationship representing the relationship between the center point coordinates and the RT matrix, a second linear relationship representing the relationship between the perimeter and the RT matrix, and a third linear relationship representing the relationship between the center point coordinates and the perimeter, a first transformation relationship representing the relationship between a first rotation matrix for converting the reference camera coordinate system to the current camera coordinate system and the target interior point elements, and a second transformation relationship representing the relationship between a first translation matrix for converting the reference camera coordinate system to the current camera coordinate system and the target interior point elements are constructed. Finally, the first rotation matrix and the first translation matrix are determined according to the M matrix, the N matrix, the first transformation relationship, and the second transformation relationship, so as to use the first rotation matrix and the first translation matrix as the camera extrinsic parameters of the camera. Through this method, the camera extrinsic parameters can be automatically determined without manual intervention, which helps reduce operational requirements when determining the camera extrinsic parameters.

To make the above objectives, features, and advantages of the present disclosure more apparent and easier to understand, preferred embodiments are described in detail below with reference to the accompanying drawings.

## BRIEF DESCRIPTION OF DRAWINGS

To explain the technical solutions of the embodiments of the present disclosure more clearly, the accompanying drawings will be briefly introduced. It should be understood that the drawings only show some embodiments of the present disclosure, so they should not be regarded as limiting the scope. For a person of ordinary skill in the art, other related drawings can be obtained according to these drawings without inventive effort.

FIG. 1 is a schematic diagram of a camera mounting position provided by an embodiment of the present disclosure;

FIG. 2 is a flowchart of a method for determining camera extrinsic parameters within a vehicle provided by an embodiment of the present disclosure;

FIG. 3 is a schematic diagram of a transformation relationship for camera extrinsic parameters provided by an embodiment of the present disclosure;

FIG. 4 is a flowchart of another method for determining camera extrinsic parameters within a vehicle provided by an embodiment of the present disclosure;

FIG. 5 is a flowchart of another method for determining camera extrinsic parameters within a vehicle provided by an embodiment of the present disclosure;

FIG. 6 is a schematic diagram of a movement range of a steering column provided by an embodiment of the present disclosure;

FIG. 7 is a flowchart of another method for determining camera extrinsic parameters within a vehicle provided by an embodiment of the present disclosure;

FIG. 8 is a schematic structural diagram of an apparatus for determining camera extrinsic parameters within a vehicle provided by an embodiment of the present disclosure; and

FIG. 9 is a schematic structural diagram of an electronic device provided by an embodiment of the present disclosure.

## DETAILED DESCRIPTION OF EMBODIMENTS

To make the objectives, technical solutions, and advantages of the embodiments of the present disclosure clearer, the technical solutions in the embodiments of the present disclosure will be described clearly and completely in conjunction with the accompanying drawings in the embodiments of the present disclosure. Apparently, the described embodiments are only some rather than all of the embodiments of the present disclosure. The components of the embodiments of the present disclosure generally described and illustrated in the drawings herein may be arranged and designed in various different configurations. Therefore, the following detailed description of the embodiments of the present disclosure provided in the accompanying drawings is not intended to limit the scope of the claimed disclosure, but merely represents selected embodiments thereof. Based on the embodiments of the present disclosure, all other embodiments obtained by those skilled in the art without creative effort shall fall within the scope of protection of the present disclosure.

A point p in the world coordinate system is a point in 3D space, typically represented as $p = [X_w, Y_w, Z_w]$, where $X_w$,

$Y_w$, and $Z_w$ are the coordinates of the point in the x, y, and z directions of the world coordinate system, respectively.

The origin of the world coordinate system (typically denoted as $O_w$) is the reference point of this coordinate system, typically defined as [0,0,0]. The position of the origin and the orientation of the world coordinate system are defined by users or system designers according to specific application scenarios. The definition of the world coordinate system may be arbitrary, but a reference point that facilitates description and calculation is typically selected as the origin. For example, in an indoor scenario, the origin of the world coordinate system may be defined at a corner or the center of a room. In robot navigation, the origin may be defined at the initial position of the robot. In photogrammetry, the origin may be defined at the position of a known marker. In summary, the definition of the world coordinate system is relative and depends on specific application requirements and scenarios. Selecting an appropriate origin and coordinate system orientation can simplify calculations and descriptions.

The camera coordinate system is a 3D coordinate system with the optical center of the camera (i.e., the lens center of the camera) as the origin, and is used to describe the world as seen by the camera. In the camera coordinate system, the horizontal axis of the camera image is typically taken as the x-axis, with the rightward direction as positive; the vertical axis of the camera image is taken as the y-axis, with the downward direction as positive; and the optical axis direction of the camera (the direction from the camera optical center toward the subject), perpendicular to the camera image plane, is taken as the z-axis, with the direction from the camera optical center toward the subject as positive.

Camera extrinsic parameters are parameters that describe the position and orientation of the camera in the world coordinate system. They define the transformation relationship from the world coordinate system to the camera coordinate system, typically including a rotation matrix and a translation matrix.

Rotation Matrix (R): This is a ($3 \times 3$) matrix used to describe the rotational relationship of the camera coordinate system relative to the world coordinate system. The rotation matrix can rotate points from the world coordinate system to the camera coordinate system.

Translation Matrix (T): This is a ($3 \times 1$) matrix used to describe the translational relationship of the camera coordinate system relative to the world coordinate system. The translation matrix can translate points from the world coordinate system to the camera coordinate system.

The function of camera extrinsic parameters is to transform a point $P_w = [X_w, Y_w, Z_w]$ in the world coordinate system to a point $P_c = [X_c, Y_c, Z_c]$ in the camera coordinate system. The transformation relationship may be expressed as:

$P_c = R \cdot P_w + T$. For convenience of calculation, a ($4 \times 4$) matrix $\begin{bmatrix} R & T \\ 0 & 1 \end{bmatrix}$ is generally constructed, which is the RT matrix.

Thus, the above transformation relationship may also be expressed as: $P_c = RT \cdot P_w$.

In summary, an RT matrix can transform a point in the world coordinate system to the camera coordinate system, and this RT matrix is also referred to as the camera extrinsic parameters.

The following is a detailed description of the present disclosure.

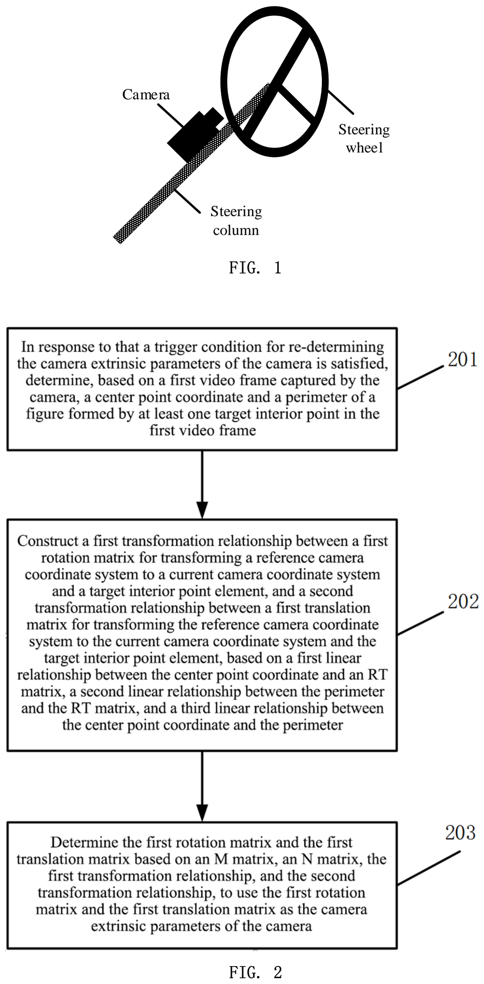

FIG. 1 is a schematic diagram of a camera mounting position provided by an embodiment of the present disclosure. As shown in FIG. 1, a camera is arranged on a steering column of the vehicle's steering wheel. Using images captured by this camera, gaze tracking technology is employed to determine the user's position in the camera coordinate system.

FIG. 2 is a flowchart of a method for determining camera extrinsic parameters within a vehicle provided by an embodiment of the present disclosure. As shown in FIG. 2, the method includes the following steps:

step 201: when a trigger condition for re-determining the camera extrinsic parameters of the camera is satisfied, determining a center point coordinate and a perimeter of a figure formed by at least one target interior point in a first video frame captured by the camera, wherein when a quantity of the at least one target interior point is one, the center point coordinate is the pixel coordinate of the target interior point, and the perimeter is the horizontal coordinate of the target interior point;

step 202: constructing a first transformation relationship between a first rotation matrix for transforming a reference camera coordinate system to a current camera coordinate system and a target interior point element, and a second transformation relationship between a first translation matrix for transforming the reference camera coordinate system to the current camera coordinate system and the target interior point element, based on a first linear relationship between the center point coordinate and an RT matrix, a second linear relationship between the perimeter and the RT matrix, and a third linear relationship between the center point coordinate and the perimeter, wherein the target interior point element includes the center point coordinate and the perimeter, and the RT matrix is composed of a rotation matrix and a translation matrix; and

step 203: determining the first rotation matrix and the first translation matrix based on an M matrix, an N matrix, the first transformation relationship, and the second transformation relationship, thereby using the first rotation matrix and the first translation matrix as the camera extrinsic parameters of the camera, wherein the M matrix is a second translation matrix for transforming a specified pixel point in the first video frame, captured by the camera at a current position, to the reference camera coordinate system, and the N matrix is a second rotation matrix for transforming the specified pixel point in the first video frame, captured by the camera at the current position, to the reference camera coordinate system.

Specifically, when the camera position changes, or other reasons (e.g., reaching the determination cycle for camera extrinsic parameters) necessitate re-determining the camera extrinsic parameters, the camera can capture images of the vehicle cabin to obtain a first video frame containing the cabin scenario. Then, based on the pixel coordinates of the target interior points in the first video frame, the center point coordinates and perimeter of the figure formed by the target interior points are determined. For example, when the quantity of target interior points is one, the center point coordinates are the pixel coordinates of the target interior point, and the perimeter is the horizontal coordinate of the target interior point, when the quantity of target interior points is two, the figure formed by the target interior points is a straight line, the center point coordinates are the midpoint of the straight line, and the perimeter is the length of the straight line, when the quantity of target interior points is three and they are not collinear, the figure formed by the target interior points is a triangle, the X-value of the center point coordinates is determined by the average of the x-axis pixel coordinates of the three vertices of the triangle, the Y-value of the center point coordinates is determined by the average of the y-axis pixel coordinates of the three vertices of the triangle, thereby obtaining the center point coordinates, and the perimeter of the triangle can be obtained using the pixel coordinates of the three vertices of the triangle, and so on for the center point coordinates and perimeters of figures formed by other numbers of target interior points.

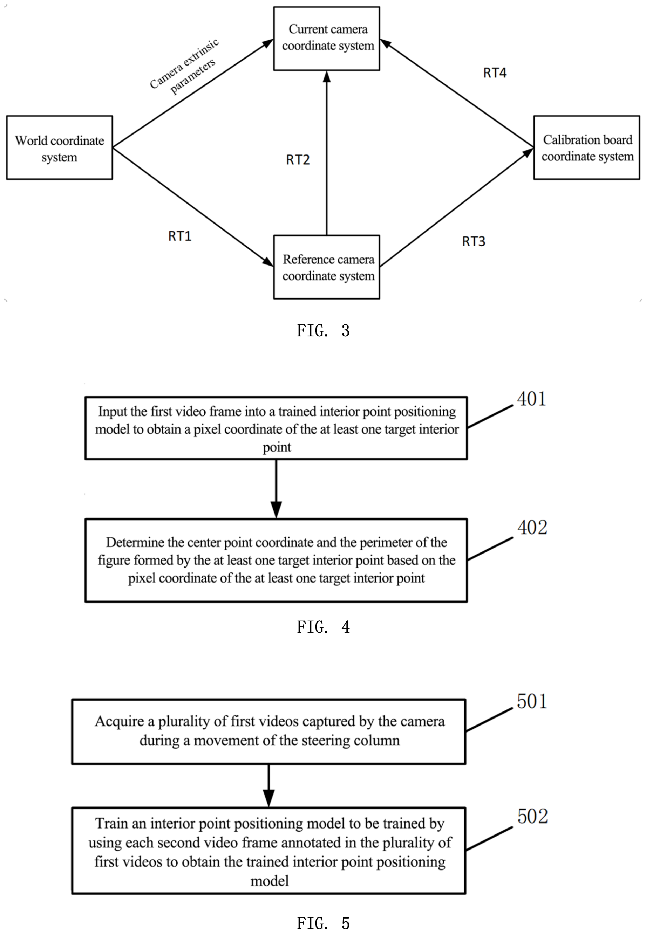

FIG. 3 is a schematic diagram of a transformation relationship for camera extrinsic parameters provided by an embodiment of the present disclosure. As shown in FIG. 3, the reference camera coordinate system is calibrated when the vehicle leaves the factory. Therefore, the RT matrix for transforming the world coordinate system to the reference camera coordinate system is known and may be referred to as the RT1 matrix. After the camera position changes, the current camera coordinate system is generated. Once the RT2 matrix for transforming the reference camera coordinate system to the current camera coordinate system is known, the camera extrinsic parameters for transforming the world coordinate system to the current camera coordinate system can be obtained through the RT1 matrix and the RT2 matrix.

When calculating the RT2 matrix, if a calibration board coordinate system of a calibration board exists, after knowing the reference camera coordinate system and the current camera coordinate system, the RT3 matrix for transforming the reference camera coordinate system to the calibration board coordinate system and the RT4 matrix for transforming the calibration board coordinate system to the current camera coordinate system can be obtained, thereby deriving the RT2 matrix based on the RT3 matrix and the RT4 matrix.

A calibration board cannot always be present inside the vehicle. However, the function of the calibration board is essentially equivalent to that of a fixed point. Therefore, other fixed objects may be used to replace the calibration board. Since the interior points in the vehicle do not change, interior points may be used to replace the calibration board, thereby obtaining the RT2 matrix.

Because the reference camera coordinate system and the interior points do not change with camera variations, their relationship remains unchanged when the camera position changes. However, the relationship between the interior points and the current camera coordinate system changes. Therefore, through the transformation relationship between the reference camera coordinate system and the interior points (fixed), and the transformation relationship between the interior points and the current camera coordinate system (variable), the RT2 matrix can be obtained. In this transformation process, it is observed that the transformation relationship between the interior points and the current camera coordinate system is linear. Simultaneously, since the relationship between the pixel coordinates of the target interior points and the coordinate system where the interior points are located is invariant, the transformation relationship between the interior points and the current camera coordinate system and the pixel coordinates of the target interior points may also form a linear relationship. The center point and perimeter of the figure formed by the target interior points can be derived from the pixel coordinates of the target interior points. Therefore, the center point coordinates and perimeter of the figure formed by the target interior points also have a linear relationship with the transformation relationship between the interior points and the current camera coordinate system. Based on this linear relationship, the linear relationship between the center point coordinates of the figure formed by the target interior points and the RT2 matrix, i.e., the first linear relationship, and the linear relationship between the perimeter of the figure formed by the target interior points and the RT2 matrix, i.e., the second linear relationship, can be obtained. Additionally, by analyzing different numbers of target interior points, the linear relationship between the center point coordinates and the perimeter of the figure formed by the target interior points, i.e., the third linear relationship, can be derived. Therefore, after obtaining the center point coordinates and perimeter of the figure formed by the target interior points corresponding to the first video frame captured by the camera at the current position, based on the above three linear relationships, a first transformation relationship representing the relationship between the first rotation matrix for converting the reference camera coordinate system to the current camera coordinate system and the target interior point elements, and a second transformation relationship representing the relationship between the first translation matrix for converting the reference camera coordinate system to the current camera coordinate system and the target interior point elements can be constructed.

Then, based on the pre-obtained M matrix characterizing the transformation of the specified pixel point in the first video frame captured by the camera at the current position to the reference camera coordinate system, and the N matrix characterizing the transformation of the specified pixel point in the first video frame captured by the camera at the current position to the reference camera coordinate system, the accurate first rotation matrix and first translation matrix can be calculated using the above four types of data. The first rotation matrix and first translation matrix can constitute the aforementioned camera extrinsic parameters.

Through the above method, camera extrinsic parameters can be obtained without using a calibration board. Moreover, this method can automatically determine the camera extrinsic parameters without manual intervention, which helps reduce operational requirements when determining the camera extrinsic parameters.

Herein, the derivation process of the M matrix and the N matrix is as follows:

Through observation, the equation is modeled. The relationship between RT (here representing the RT2 matrix) and y (the center point coordinates of the figure formed by the target interior points) and s (the perimeter of the figure formed by the target interior points) is: $(H * y + I) * (J * s + K) = RT$ or after simplification, $A * y * s + B * y + C * s + D = RT$, where A, B, C, D represent the coefficients to be determined.

Calculation of *R:*

$$A * y * s + B * y + C * s + D = R;$$

R may be represented by a quaternion, i.e.:

$$A * y * s + B * y + C * s + D = \begin{bmatrix} w_q & x_q & y_q & z_q \end{bmatrix};$$

After transformation, we obtain:

$$\begin{bmatrix} y * s & y & s & 1 \end{bmatrix} * \begin{bmatrix} A_w & A_x & A_y & A_z \\ B_w & B_x & B_y & B_z \\ C_w & C_x & C_y & C_z \\ D_w & D_x & D_y & D_z \end{bmatrix} = \begin{bmatrix} w_q & x_q & y_q & z_q \end{bmatrix};$$

where $\begin{bmatrix} A_w & A_x & A_y & A_z \\ B_w & B_x & B_y & B_z \\ C_w & C_x & C_y & C_z \\ D_w & D_x & D_y & D_z \end{bmatrix}$ is the matrix M.

Calculation of T:

$$A * y * s + B * y + C * s + D = T;$$

T is a 3x1 matrix, so the following formula can be obtained:

$$A * y * s + B * y + C * s + D = \begin{bmatrix} x_T & y_T & z_T \end{bmatrix};$$

Converting to matrix multiplication yields:

$$\begin{bmatrix} y * s & y & s & 1 \end{bmatrix} * \begin{bmatrix} A_x & A_y & A_z \\ B_x & B_y & B_z \\ C_x & C_y & C_z \\ D_x & D_y & D_z \end{bmatrix} = \begin{bmatrix} x_T & y_T & z_T \end{bmatrix};$$

$$\text{where } \begin{bmatrix} A_x & A_y & A_z \\ B_x & B_y & B_z \\ C_x & C_y & C_z \\ D_x & D_y & D_z \end{bmatrix} \text{ can be used as the N matrix.}$$

By collecting different video frames, multiple sets of corresponding data for y, s, and RT can be obtained. Setting up equations for n sets of y, s with R and T respectively yields equation systems for the M matrix and the N matrix. Then, using the least squares method to solve the n sets of data, usable M and N matrices can be obtained.

After obtaining the usable M and N matrices, the camera extrinsic parameters can be obtained provided that the center point coordinates and perimeter of the figure formed by the target interior points are obtained.

In a feasible implementation, FIG. 4 is a flowchart of another method for determining camera extrinsic parameters within a vehicle provided by an embodiment of the present disclosure. As shown in FIG. 4, when executing step 201, it may be implemented through the following steps:

step 401: inputting the first video frame into a trained interior point positioning model to obtain a pixel coordinate of the at least one target interior point; and
step 402: determining the center point coordinate and the perimeter of the figure formed by the at least one target interior point based on the pixel coordinate of the at least one target interior point.

Specifically, after the interior point positioning model is trained, the target interior points in the input first video frame is quickly located, the pixel coordinates of the target interior points is determined, thereby obtaining the corresponding center point coordinates and perimeter, and then the aforementioned first rotation matrix and first translation matrix is quickly derived.

In a feasible implementation, FIG. 5 is a flowchart of another method for determining camera extrinsic parameters within a vehicle provided by an embodiment of the present disclosure. As shown in FIG. 5, when training the interior point positioning model, it is completed through the following steps:

step 501: acquiring a plurality of first videos captured by the camera during movement of the steering column; and
step 502: training an interior point positioning model to be trained by using each second video frame annotated in the plurality of first videos to obtain the trained interior point positioning model, wherein when annotating each second video frame, the target interior point in each second video frame is annotated.

Specifically, since the trained interior point positioning model is used to identify the pixel coordinates of interior points inside the vehicle, to ensure the trained model has good performance, video frames from the first videos captured by the camera mounted on the steering column may be used as samples for training. As the samples are real images from inside the vehicle, the interior point positioning model trained in this manner has higher recognition accuracy. To ensure sample comprehensiveness, the camera may capture the vehicle interior from different angles by moving the steering column.

It should be noted that the specific interior point positioning model, the training method for the interior point positioning model, and the movement method of the steering column may be set according to actual needs, and are not specifically limited here.

In a feasible implementation, during movement of the steering column, a movement range of the steering column is less than or equal to a region defined by a maximum stroke attainable by the steering column during vertical and telescopic movement.

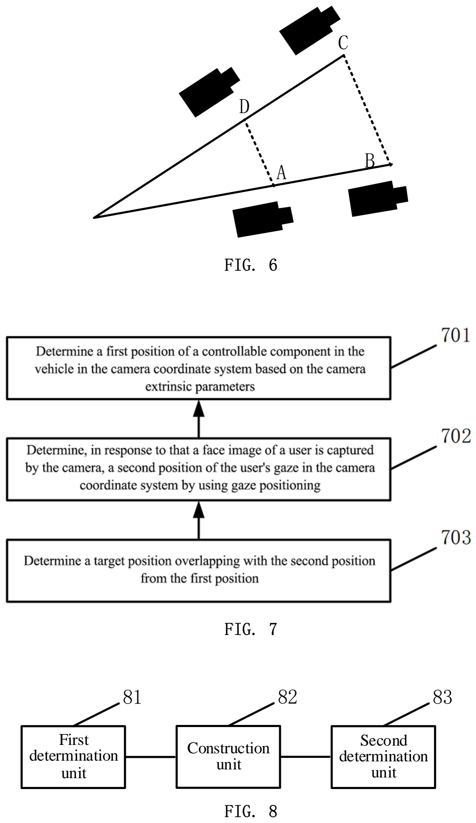

Specifically, FIG. 6 is a schematic diagram of a movement range of a steering column provided by an embodiment of the present disclosure. The steering column of the steering wheel may be adjusted telescopically and vertically. As shown in FIG. 6, the adjustment range of the steering column is a rectangular region formed by points A, B, C, and D in FIG. 6, i.e., this rectangular region is the region formed by the maximum stroke of the steering column. Since the camera is mounted on the steering column, movement of the steering column also moves the camera. Therefore, the movement range of the steering column is the movement range of the camera. In other words, by adjusting the steering column, the camera may be positioned at any point within the aforementioned rectangular region. Furthermore, the movement range of the camera is less than or equal to the aforementioned rectangular region. When the camera moves within this rectangular region, it can capture the vehicle interior from as many different angles as possible, thereby making the obtained samples more diverse, which helps improve the accuracy of the trained interior point positioning model in identifying the pixel coordinates of target interior points.

In a feasible implementation, each of the plurality of first videos includes a plurality of sub-videos captured at a plurality of discrete positions within the movement range.

Specifically, to ensure sample diversity, sub-videos need to be captured at multiple positions within the rectangular range shown in FIG. 6.

In a feasible implementation, the movement of the steering column starts from a first vertex of a trapezoid formed by the region and ends at a second vertex on a side of the trapezoid opposite to a side where the first vertex is located; during the movement, the steering column moves in an S-shape; and during the S-shaped movement, a distance between peaks and troughs of the S-shape and the maximum stroke attainable by the steering column is less than a preset distance.

Specifically, to ensure sample diversity, as shown in FIG. 6, any of the four vertices A, B, C, D may be used as the starting point, and the movement may be performed along an S-shaped path within the rectangular range shown in FIG. 6 until reaching the low point corresponding to the starting vertex. During the movement, the distance between the S-shaped peaks and troughs and the AD or BC sides is less than a preset distance, or the AD and BC sides serve as the boundaries for the S-shaped peaks and troughs, or the AB and CD sides serve as the boundaries for the S-shaped peaks and troughs.

It should be noted that the width of the peaks or troughs during the movement may be set according to actual needs, and is not specifically limited here.

In a feasible implementation, the plurality of different first videos are captured under different illumination conditions.

Specifically, to ensure sample diversity, multiple first videos may be captured under different illumination conditions. For example, when capturing first videos, multiple first videos may be captured in the morning, at noon, in the afternoon, and at night, respectively. This ensures that the illumination conditions of the training samples are different, which is beneficial for improving model training results.

In a feasible implementation, the at least one target interior point comprises at least one of: a position in a second video frame having a pixel difference greater than a preset pixel difference; or an acute angle point formed by two edges in the second video frame.

Specifically, when annotating target interior points, boundaries between different materials are selected, and positions where color steps are clearly visible in the imaging are selected as target interior points. Corner points, i.e., points located at the intersection of two edges, may also be selected with priority given to acute angle points. Such target interior points have relatively distinct features, which is beneficial for the success rate of recognition.

In a feasible implementation, a quantity of target interior points annotated in any second video frame is equal to a quantity of target interior points determined in the first video frame.

Specifically, when annotating target interior points in the second video frames, the number and positions of annotated interior points are consistent across different second video frames according to actual needs. After training the interior point positioning model with such second video frames, the model can identify all interior points, facilitating subsequent processing.

In a feasible implementation, the trigger condition includes at least one of:
upon vehicle startup, upon movement of a steering wheel position, upon reaching a re-determination period for the camera extrinsic parameters, or upon a travel speed of the vehicle exceeding a preset speed.

Specifically, when the vehicle starts, i.e., when the vehicle's speed changes from 0 to motion, or when the vehicle switches from a stationary state to a moving state, the camera position may have moved, necessitating re-determination of camera parameters. Alternatively, when the steering wheel position changes, when the re-determination period for camera extrinsic parameters is reached, or when the vehicle's travel speed exceeds a preset speed (i.e., after the vehicle starts moving), to ensure accuracy in tracking the user's gaze, the camera extrinsic parameters need to be re-determined.

When determining whether the steering wheel position has moved, since the camera in the present disclosure can be used for gaze tracking, the camera continuously captures videos during vehicle use. Two video frames separated by a preset interval in consecutive videos can be compared, e.g., comparing the pixel coordinates of a certain interior point to determine if the steering wheel has displaced. Alternatively, when the vehicle starts, the last image frame captured before vehicle startup and the first image frame captured after startup can be compared, e.g., comparing the pixel coordinates of a certain interior point to determine if the steering wheel has displaced.

In a feasible implementation, FIG. 7 is a flowchart of another method for determining camera extrinsic parameters within a vehicle provided by an embodiment of the present disclosure. As shown in FIG. 7, after determining the camera extrinsic parameters, the method further includes the following steps:

step 701: determining a first position of a controllable component in the vehicle in the camera coordinate system based on the camera extrinsic parameters;
step 702: determining, when a face image of a user is captured by the camera, a second position of the user's gaze in the camera coordinate system by using gaze positioning; and
step 703: determining a target position overlapping with the second position from the first position.

Specifically, after determining the camera extrinsic parameters corresponding to the current camera position, the positions of controllable components inside the vehicle in the camera coordinate system can be determined. After determining the position of the user's gaze in the current camera coordinate system using gaze positioning, it can be determined which controllable component the user is currently looking at, allowing the user to perform gesture control on that controllable component.

It should be noted that controllable components include: in-vehicle screens, sunroofs, in-vehicle players, in-vehicle camera apparatuses, cabin lighting, and other components inside the vehicle that can be controlled via control interfaces.

FIG. 8 is a schematic structural diagram of an apparatus for determining camera extrinsic parameters within a vehicle provided by an embodiment of the present disclosure. As shown in FIG. 8, the apparatus includes:

a first determination unit 81, configured to, when a trigger condition for re-determining the camera extrinsic parameters of the camera is satisfied, determine a center point coordinate and a perimeter of a figure formed by at least one target interior point in a first video frame captured by the camera, wherein when a quantity of the at least one target interior point is one, the center point coordinate is the pixel coordinate of the target interior point, and the perimeter is the horizontal coordinate of the target interior point, and the camera is mounted on the steering column of the vehicle's steering wheel.

a construction unit 82, configured to construct a first transformation relationship between a first rotation matrix for transforming a reference camera coordinate system to a current camera coordinate system and a target interior point element, and a second transformation relationship between a first translation matrix for transforming the reference camera coordinate system to the current camera coordinate system and the target interior point element, based on a first linear relationship between the center point coordinate and an RT matrix, a second linear relationship between the perimeter and the RT matrix, and a third linear relationship between the center point coordinate and the perimeter, wherein the target interior point element includes the center point coordinate and the perimeter, and the RT matrix is composed of a rotation matrix and a translation matrix.

a second determination unit 83, configured to determine the first rotation matrix and the first translation matrix based on an M matrix, an N matrix, the first transformation relationship, and the second transformation relationship, thereby using the first rotation matrix and the first translation matrix as the camera extrinsic parameters of the camera, wherein the M matrix is a second translation matrix for transforming a specified pixel point in the first video frame, captured by the camera at a current position, to the reference camera coordinate system, and the N matrix is a second rotation matrix for transforming the specified pixel point in the first video frame, captured by the camera at the current position, to the reference camera coordinate system.

In a feasible implementation, the first determination unit 81, when configured to determine a center point coordinate and a perimeter of a figure formed by at least one target interior point in a first video frame captured by the camera, is specifically configured to:

input the first video frame into a trained interior point positioning model to obtain a pixel coordinate of the at least one target interior point; and
determine the center point coordinate and the perimeter of the figure formed by the at least one target interior point based on the pixel coordinate of the at least one target interior point.

In a feasible implementation, the apparatus further includes:

an acquisition unit, configured to acquire a plurality of first videos captured by the camera during movement of the steering column; and
a training unit, configured to train an interior point positioning model to be trained by using each second video frame annotated in the plurality of first videos to obtain the trained interior point positioning model, wherein when annotating each second video frame, the target interior point in each second video frame is annotated.

In a feasible implementation, a movement range of the steering column is less than or equal to a region defined by a maximum stroke attainable by the steering column during vertical and telescopic movement.

In a feasible implementation, each of the plurality of first videos includes a plurality of sub-videos captured at a plurality of discrete positions within the movement range.

In a feasible implementation, the movement of the steering column starts from a first vertex of a trapezoid formed by the region and ends at a second vertex on a side of the trapezoid opposite to a side where the first vertex is located; during the movement, the steering column moves in an S-shape; and during the S-shaped movement, a distance between peaks and troughs of the S-shape and the maximum stroke attainable by the steering column is less than a preset distance.

In a feasible implementation, the plurality of different first videos are captured under different illumination conditions.

In a feasible implementation, the at least one target interior point comprises at least one of: a position in a second video frame having a pixel difference greater than a preset pixel difference; or an acute angle point formed by two edges in the second video frame.

In a feasible implementation, a quantity of target interior points annotated in any second video frame is equal to a quantity of target interior points determined in the first video frame.

In a feasible implementation, the trigger condition includes at least one of:
upon vehicle startup, upon movement of a steering wheel position, upon reaching a re-determination period for the camera extrinsic parameters, or upon a travel speed of the vehicle exceeding a preset speed.

In a feasible implementation, the apparatus further includes:

a third determination unit, configured to determine a first position of a controllable component in the vehicle in the camera coordinate system based on the camera extrinsic parameters;
a positioning unit, configured to determine, when a face image of a user is captured by the camera, a second position of the user's gaze in the camera coordinate system by using gaze positioning; and
a fourth determination unit, configured to determine a target position overlapping with the second position from the first position.

For relevant explanations regarding the apparatus for determining camera extrinsic parameters within a vehicle, please refer to the corresponding descriptions in the method for determining camera extrinsic parameters within a vehicle, which will not be detailed here.

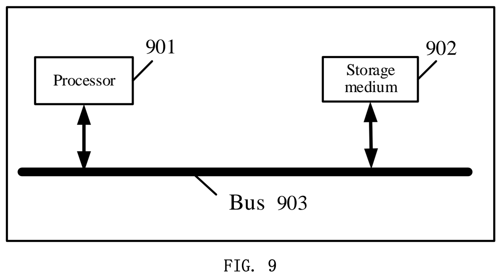

FIG. 9 is a schematic structural diagram of an electronic device provided by an embodiment of the present disclosure. The electronic device includes: a processor 901, a storage medium 902, and a bus 903. The storage medium 902 stores machine-readable instructions executable by the processor 901. When the electronic device performs a method for determining camera extrinsic parameters within a vehicle as described in the embodiments, the processor 901 communicates with the storage medium 902 via the bus 903, and the processor 901 executes the machine-readable instructions to perform the steps as described in the embodiments.

In an embodiment, the storage medium 902 may also execute other machine-readable instructions to perform other methods as described in the embodiments. For specific method steps and principles, please refer to the descriptions in the embodiments, which will not be repeated here.

Embodiment 4 of the present disclosure also provides a computer-readable storage medium storing a computer program that, when executed by a processor, causes the processor to perform the steps shown in the aforementioned embodiments.

In the embodiments provided by the present disclosure, it should be understood that the disclosed apparatus and methods may be implemented in other ways. The apparatus embodiments described above are merely illustrative. For example, the division of units is only a logical functional division. In actual implementation, there may be other divisions. Similarly, multiple units or components may be combined or integrated into another system, or some features may be omitted or not executed. Additionally, the mutual couplings, direct couplings or communication connections shown or discussed may be indirect couplings or communication connections through some communication interfaces, apparatuses or units, and may be in electrical, mechanical or other forms.

The units described as separate components may or may not be physically separated, and the components displayed as units may or may not be physical units, that is, they may be located in one place or distributed to multiple network units. Some or all of the units may be selected according to actual needs to achieve the objectives of the solutions of the embodiments.

Additionally, the functional units in the embodiments provided by the present disclosure may be integrated into one processing unit, or each unit may exist physically separately, or two or more units may be integrated into one unit.

If the functions are implemented in the form of software functional units and sold or used as independent products, they may be stored in a computer-readable storage medium. Based on such understanding, the essence of the technical solutions, or the part contributing to the prior art, or part of the technical solutions of the present disclosure, may be embodied in the form of a software product. The computer software product is stored in a storage medium and includes several instructions for enabling a computer device (which may be a personal computer, a server, a network device, etc.) to perform all or part of the steps of the methods described in the various embodiments of the present disclosure. The aforementioned storage media include: U disk, mobile hard disk, read-only memory (ROM), random access memory (RAM), magnetic disk, optical disk, and other media that can store program code.

It should be noted that similar reference numerals and letters in the following drawings indicate similar items. Therefore, once an item is defined in one drawing, it does not need to be further defined and explained in subsequent drawings. Additionally, the terms "first," "second," "third," etc., are used only for distinguishing descriptions and should not be construed as indicating or implying relative importance.

Finally, it should be noted that the above embodiments are only specific implementations of the present disclosure, intended to illustrate the technical solutions of the present disclosure rather than limit them. The scope of protection of the present disclosure is not limited thereto. Although the present disclosure has been described in detail with reference to the aforementioned embodiments, those skilled in the art should understand that any person skilled in the art, within the technical scope disclosed in the present disclosure, may still modify or readily conceive variations to the technical solutions described in the aforementioned embodiments, or perform equivalent substitutions of some of the technical features. However, such modifications, variations, or substitutions do not cause the essence of the corresponding technical solutions to depart from the spirit and scope of the technical solutions of the embodiments of the present disclosure. All such modifications, variations, or replacements shall fall within the scope of protection of the present disclosure. Therefore, the protection scope of the present disclosure shall be determined by the protection scope of the appended claims.

## INDUSTRIAL PRACTICALITY

In the present disclosure, when it is necessary to re-determine the camera extrinsic parameters, a first video frame is obtained based on images captured by a camera mounted on the steering column of the vehicle. The center point coordinates and perimeter of a figure formed by at least one target interior point in the first video frame are determined. Then, based on a first linear relationship representing the relationship between the center point coordinates and the RT matrix, a second linear relationship representing the relationship between the perimeter and the RT matrix, and a third linear relationship representing the relationship between the center point coordinates and the perimeter, a first transformation relationship representing the relationship between a first rotation matrix for converting the reference camera coordinate system to the current camera coordinate system and the target interior point elements, and a second transformation relationship representing the relationship between a first translation matrix for converting the reference camera coordinate system to the current camera coordinate system and the target interior point elements are constructed. Finally, the first rotation matrix and the first translation matrix are determined according to the M matrix, the N matrix, the first transformation relationship, and the second transformation relationship, so as to use the first rotation matrix and the first translation matrix as the camera extrinsic parameters of the camera. Through this method, the camera extrinsic parameters can be automatically determined without manual intervention, which helps reduce operational requirements when determining the camera extrinsic parameters.

Furthermore, it can be understood that the method, the apparatus, the electronic device, and the storage medium for determining camera extrinsic parameters within a vehicle provided by the embodiments of the present disclosure are reproducible and can be used in various industrial applications. For example, the method, the apparatus, the electronic device, and the storage medium for determining camera extrinsic parameters within a vehicle provided by the embodiments of the present disclosure can be applied in the field of computer technology.

## Claims

1. A method for determining camera extrinsic parameters within a vehicle, **characterized in that** a camera is arranged on a steering column of the vehicle, and the method comprises steps of:

   in response to that a trigger condition for re-determining the camera extrinsic parameters of the camera is satisfied, determining, based on a first video frame captured by the camera, a center point coordinate and a perimeter of a figure formed by at least one target interior point in the first video frame, wherein in response to that a quantity of the at least one target interior point is one, the center point coordinate is a pixel coordinate of the target interior point, and the perimeter is a horizontal coordinate of the target interior point;
   constructing a first transformation relationship between a first rotation matrix for transforming a reference camera coordinate system to a current camera coordinate system and a target interior point element, and a second transformation relationship between a first translation matrix for transforming the reference camera coordinate system to the current camera coordinate system and the target interior point element, based on a first linear relationship between the center point coordinate and an RT matrix, a second linear relationship between the perimeter and the RT matrix, and a third linear relationship between the center point coordinate and the perimeter, wherein the target interior point element comprises the center point coordinate and the perimeter, and the RT matrix is composed of a rotation matrix and a translation matrix;
   determining the first rotation matrix and the first translation matrix based on an M matrix, an N matrix, the first transformation relationship, and the second transformation relationship, to use the first rotation matrix and the first translation matrix as the camera extrinsic parameters of the camera, wherein the M matrix is a second translation matrix for transforming a specified pixel point in the first video frame, captured by the camera at a current position, to the reference camera coordinate system, and the N matrix is a second rotation matrix for transforming the specified pixel point in the first video frame, captured by the camera at the current position, to the reference camera coordinate system.

2. The method according to claim 1, wherein the step of determining, based on a first video frame captured by the camera, a center point coordinate and a perimeter of a figure formed by at least one target interior point in the first video frame comprises:

inputting the first video frame into a trained interior point positioning model to obtain a pixel coordinate of the at least one target interior point; and
determining the center point coordinate and the perimeter of the figure formed by the at least one target interior point based on the pixel coordinate of the at least one target interior point.

3. The method according to claim 2, further comprising:

acquiring a plurality of first videos captured by the camera during a movement of the steering column; and
training an interior point positioning model to be trained by using each second video frame annotated in the plurality of first videos to obtain the trained interior point positioning model, wherein when annotating each second video frame, the target interior point in each second video frame is annotated.

4. The method according to claim 3, wherein a movement range of the steering column is less than or equal to a region defined by a maximum stroke attainable by the steering column during vertical and telescopic movement.

5. The method according to claim 4, wherein each of the plurality of first videos comprises a plurality of sub-videos captured at a plurality of discrete positions within the movement range.

6. The method according to claim 4, wherein the movement of the steering column starts from a first vertex of a trapezoid formed by the region and ends at a second vertex on a side of the trapezoid opposite to a side where the first vertex is located; during the movement, the steering column moves in an S-shape; and during the S-shaped movement, a distance between peaks and troughs of the S-shape and the maximum stroke attainable by the steering column is less than a preset distance.

7. The method according to claim 3, wherein the plurality of different first videos are captured under different illumination conditions.

8. The method according to claim 3, wherein the at least one target interior point comprises at least one of: a position in the second video frame having a pixel difference greater than a preset pixel difference; or an acute angle point formed by two edges in the second video frame.

9. The method according to claim 3, wherein a quantity of target interior points annotated in any second video frame is equal to a quantity of target interior points determined in the first video frame.

10. The method according to claim 1, wherein the trigger condition comprises at least one of:
upon vehicle startup, upon a movement of a steering wheel position, upon reaching a re-determination period for the camera extrinsic parameters, or upon a travel speed of the vehicle exceeding a preset speed.

11. The method according to claim 1, further comprising:

determining a first position of a controllable component in the vehicle in the camera coordinate system based on the camera extrinsic parameters;
determining, in response to that a face image of a user is captured by the camera, a second position of the user's gaze in the camera coordinate system by using gaze positioning; and
determining a target position overlapping with the second position from the first position.

12. An apparatus for determining camera extrinsic parameters within a vehicle, comprising:

a first determination unit, configured to, in response to that a trigger condition for re-determining the camera extrinsic parameters of a camera is satisfied, determine, based on a first video frame captured by the camera, a center point coordinate and a perimeter of a figure formed by at least one target interior point in the first video frame captured by the camera, wherein in response to that a quantity of the at least one target interior point is one, the center point coordinate is a pixel coordinate of the target interior point, and the perimeter is a horizontal coordinate of the target interior point, and wherein the camera is arranged on a steering column of the vehicle; a construction unit, configured to construct a first transformation relationship between a first rotation matrix for transforming a reference camera coordinate system to a current camera coordinate system and a target interior point element, and a second transformation relationship between a first translation matrix for transforming the reference camera coordinate system to the current camera coordinate system and the target interior point element, based on a first linear relationship between the center point coordinate and an RT matrix, a second linear relationship between the perimeter and the RT matrix, and a third linear relationship between the center point coordinate and the perimeter, wherein the target interior point element comprises the center point coordinate and the perimeter, and the RT matrix is composed of a rotation matrix and a translation matrix; a second determination unit, configured to determine the first rotation matrix and the first translation matrix based on an M matrix, an N matrix, the first transformation relationship, and the second transformation relationship, to use the first rotation matrix and the first translation matrix as the camera extrinsic parameters of the camera, wherein the M matrix is a second translation matrix for transforming a specified pixel point in the first video frame, captured by the camera at a current position, to the reference camera coordinate system, and the N matrix is a second rotation matrix for transforming the specified pixel point in the first video frame, captured by the camera at the current position, to the reference camera coordinate system.

13. An electronic device, **characterized by** comprising a processor and a memory, wherein the memory stores machine-executable instructions executable by the processor, and the processor is configured to execute the machine-executable instructions to perform the method for determining camera extrinsic parameters within a vehicle according to any one of claims 1 to 11.

14. A machine-readable storage medium, **characterized by** storing machine-executable instructions that, when invoked and executed by a processor, cause the processor to perform the method for determining camera extrinsic parameters within a vehicle according to any one of claims 1 to 11.

Camera

Steering wheel

Steering column

FIG. 1

In response to that a trigger condition for re-determining the camera extrinsic parameters of the camera is satisfied, determine, based on a first video frame captured by the camera, a center point coordinate and a perimeter of a figure formed by at least one target interior point in the first video frame — 201

Construct a first transformation relationship between a first rotation matrix for transforming a reference camera coordinate system to a current camera coordinate system and a target interior point element, and a second transformation relationship between a first translation matrix for transforming the reference camera coordinate system to the current camera coordinate system and the target interior point element, based on a first linear relationship between the center point coordinate and an RT matrix, a second linear relationship between the perimeter and the RT matrix, and a third linear relationship between the center point coordinate and the perimeter — 202

Determine the first rotation matrix and the first translation matrix based on an M matrix, an N matrix, the first transformation relationship, and the second transformation relationship, to use the first rotation matrix and the first translation matrix as the camera extrinsic parameters of the camera — 203

FIG. 2

FIG. 3

FIG. 4

FIG. 5

FIG. 6

| | |
|---|---|
| Determine a first position of a controllable component in the vehicle in the camera coordinate system based on the camera extrinsic parameters | 701 |
| Determine, in response to that a face image of a user is captured by the camera, a second position of the user's gaze in the camera coordinate system by using gaze positioning | 702 |
| Determine a target position overlapping with the second position from the first position | 703 |

FIG. 7

FIG. 8

FIG. 9

# EP 4 730 261 A1

## INTERNATIONAL SEARCH REPORT

| | International application No. |
|---|---|
| | **PCT/CN2024/121538** |

**A. CLASSIFICATION OF SUBJECT MATTER**

G06T 7/80(2017.01)i; G06F 3/01(2006.01)i

According to International Patent Classification (IPC) or to both national classification and IPC

**B. FIELDS SEARCHED**

Minimum documentation searched (classification system followed by classification symbols)

IPC:G06T,G06F

Documentation searched other than minimum documentation to the extent that such documents are included in the fields searched

Electronic data base consulted during the international search (name of data base and, where practicable, search terms used)

CNTXT, CNABS, WPABS, WPABSC, ENTXT, ENTXTC, DWPI, CNKI, IEEE: 车辆, 交通工具, 车载, 相机, 外参, 内饰, 点, 坐标, 周长, 转换, 平移, 旋转, 矩阵, 基准, 世界坐标系, 相机坐标系, 转移, 更新, 变更, vehicle, car, camera, external, reference, point, coordinate, perimeter, transformation, translation, rotate, matrix, world, transition, update, change, convert, conversion

**C. DOCUMENTS CONSIDERED TO BE RELEVANT**

| Category* | Citation of document, with indication, where appropriate, of the relevant passages | Relevant to claim No. |
|---|---|---|
| PX | CN 118644560 A (HANGZHOU RUIJIAN ZHIXING TECHNOLOGY CO., LTD.) 13 September 2024 (2024-09-13)<br>claims 1-14 | 1-14 |
| A | CN 114708339 A (ZHEJIANG GEELY HOLDING GROUP CO., LTD. et al.) 05 July 2022 (2022-07-05)<br>description, paragraphs [0081]-[0163] | 1-14 |
| A | CN 115187658 A (HEFEI I-TEK OPTOELECTRONICS CO., LTD.) 14 October 2022 (2022-10-14)<br>entire document | 1-14 |
| A | CN 114730472 A (HUAWEI TECHNOLOGIES CO., LTD.) 08 July 2022 (2022-07-08)<br>entire document | 1-14 |
| A | JP 2010181209 A (TOYOTA MOTOR CORP. et al.) 19 August 2010 (2010-08-19)<br>entire document | 1-14 |

☑ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 March 2025** | **24 March 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/121538**

| C. | DOCUMENTS CONSIDERED TO BE RELEVANT | |
|---|---|---|
| Category* | Citation of document, with indication, where appropriate, of the relevant passages | Relevant to claim No. |
| A | WO 2023219893 A1 (ZOOX, INC.) 16 November 2023 (2023-11-16)<br>entire document | 1-14 |

**INTERNATIONAL SEARCH REPORT**
Information on patent family members

International application No.

**PCT/CN2024/121538**

| Patent document cited in search report | | | Publication date (day/month/year) | Patent family member(s) | | | Publication date (day/month/year) |
|---|---|---|---|---|---|---|---|
| CN | 118644560 | A | 13 September 2024 | None | | | |
| CN | 114708339 | A | 05 July 2022 | None | | | |
| CN | 115187658 | A | 14 October 2022 | None | | | |
| CN | 114730472 | A | 08 July 2022 | WO | 2023028880 | A1 | 09 March 2023 |
| JP | 2010181209 | A | 19 August 2010 | None | | | |
| WO | 2023219893 | A1 | 16 November 2023 | US | 2024098245 | A1 | 21 March 2024 |

Form PCT/ISA/210 (patent family annex) (July 2022)

**EP 4 730 261 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411118585